# EUROPEAN PATENT APPLICATION

(11) **EP 4 847 848 A1**
(43) Date of publication of application: **02.12.2026**
(21) Application number: 25794885.1
(22) Date of filing: 14.03.2025
(51) Int. Cl.: F24F 11/65, F24F 11/46, G01S 13/88, F24F 11/32, F24F 1/0007, F24F 120/12, F24F 120/14

(54) **ELECTRONIC DEVICE FOR DETECTING USER ABSENCE AND CONTROL METHOD THEREFOR**

(30) Priority: 25.04.2024 KR 20240055552; 26.08.2024 KR 20240114242
(71) Applicant: Samsung Electronics Co., Ltd., Suwon-si, Gyeonggi-do 16677 (KR)
(72) Inventor: KIM, Donghyun, Suwon-si, Gyeonggi-do 16677 (KR); JEON, Mingu, Suwon-si, Gyeonggi-do 16677 (KR); HWANG, Jun, Suwon-si, Gyeonggi-do 16677 (KR); GU, Chiwook, Suwon-si, Gyeonggi-do 16677 (KR); LEE, Soondong, Suwon-si, Gyeonggi-do 16677 (KR); CHO, Hyeongkyu, Suwon-si, Gyeonggi-do 16677 (KR); HONG, Jinwoo, Suwon-si, Gyeonggi-do 16677 (KR)
(74) Representative: Gulde & Partner
(86) International application number: PCT/KR2025/003342
(87) International publication number: WO 2025/225885

(57) **Abstract**

An electronic apparatus is disclosed. The electronic apparatus includes a motion detection sensor configured to detect movement of an object in a specific area, memory storing instructions, and at least one processor including processing circuitry, and wherein the at least one processor, when the instructions are executed individually or collectively, is configured to detect the object using the motion detection sensor, based on detection of the object, identify a second time period during which the object is not detected within a first time period through the motion detection sensor, based on the second time period satisfying a preset first condition, identify an activity level of the object through the motion detection sensor, based on the activity level of the object satisfying a preset second condition, identify that the object is absent from the specific area, and the at least one processor is further configured to, based on identifying that the second time period having a preset length is not detected a preset number of times within the first time period, identify that the second time period satisfies the preset first condition.

## Description

### Technical Field

The present disclosure relates to an electronic apparatus for detecting absence of a user and a control method thereof.

### Background Art

With the widespread adoption of smart electronic apparatuses, electronic apparatuses have become capable of determining whether a user is present or absent and controlling their operations accordingly.

An electronic apparatus may determine whether a user is absent by using a sensor. However, a sensor may incorrectly determine that the user is present even when the user is actually absent. As a result, the electronic apparatus may continue operating despite the absence of the user, leading to unnecessary power consumption.

Accordingly, there is a need for a method capable of determining whether a user is absent more accurately.

### Disclosure of Invention

### Solution to Problem

An electronic apparatus according to the present disclosure includes a motion detection sensor configured to detect movement of an object in a specific area, memory storing instructions, and at least one processor including processing circuitry, and the at least one processor, when the instructions are executed individually or collectively, is configured to detect the object using the motion detection sensor, based on detection of the object, identify a second time period during which the object is not detected within a first time period through the motion detection sensor, based on the second time period satisfying a preset first condition, identify an activity level of the object through the motion detection sensor, and based on the activity level of the object satisfying a preset second condition, identify that the object is absent from the specific area, and

the at least one processor may be configured to, based on identifying that the second time period having a preset length is not detected a preset number of times within the first time period, identify that the second time period satisfies the preset first condition.

The at least one processor, when the instructions are executed individually or collectively, may be configured to, based on the second time period not satisfying the preset first condition, identify that the object is present in the specific area.

The at least one processor, when the instructions are executed individually or collectively, may be configured to, based on the second time period satisfying the preset first condition, identify coordinate values of the object through the motion detection sensor, and identify a movement speed of the object based on the coordinate values of the object and identify the activity level of the object.

The at least one processor, when the instructions are executed individually or collectively, may be configured to, based on identifying that the object has not moved at a movement speed equal to or greater than a preset magnitude for at least a preset period of time based on the identified movement speed, identify that the activity level of the object satisfies the preset second condition.

The at least one processor, when the instructions are executed individually or collectively, may be configured to,

based on the activity level not satisfying the preset second condition, identify that the object is present in the specific area.

The at least one processor, when the instructions are executed individually or collectively, may be configured to, based on identifying that the object is absent from the specific area while the electronic apparatus is operating in an occupancy mode, change a mode of the electronic apparatus from the occupancy mode to a power-saving mode.

The motion detection sensor may be a radar sensor.

A control method of an electronic apparatus includes detecting an object using a motion detection sensor, based on detection of the object, identifying a second time period during which the object is not detected within a first time period, based on the second time period satisfying a preset first condition, identifying an activity level of the object through the motion detection sensor, and based on the activity level of the object satisfying a preset second condition, identifying that the object is absent from a specific area, and the method may further include, based on identifying that the second time period having a preset length is not detected a preset number of times within the first time period, identifying that the second time period satisfies the preset first condition.

In a non-transitory computer-readable recording medium storing one or more instructions executable by a processor of an electronic apparatus to cause the electronic apparatus to perform operations, the operations include detecting an object using a motion detection sensor, based on detection of the object, identifying a second time period during which the object is not detected within a first time period, based on the second time period satisfying a preset first condition, identifying an activity level of the object through the motion detection sensor, and based on the activity level of the object satisfying a preset second condition, identifying that the object is absent from a specific area, and the operations may further include, based on identifying that the second time period having a preset length is not detected a preset number of times within the first time period, identifying that the second time period satisfies the preset first condition.

### Brief Description of Drawings

FIG. 1 is a view illustrating a situation in which an electronic apparatus identifies a user according to at least one embodiment;
FIG. 2 is a block diagram provided to explain a configuration of an electronic apparatus according to at least one embodiment;
FIG. 3 is a flowchart provided to explain a control method of an electronic apparatus according to at least one embodiment;
FIG. 4 is a flowchart provided to explain conditions under which an electronic apparatus determines a user's absence according to at least one embodiment;
FIGS. 5 and 6 are views provided to explain a case in which a sensor generates a false detection according to at least one embodiment; and
FIGS. 7 and 8 are tables provided to explain conditions under which a user's absence is determined according to at least one embodiment.

### Mode for Invention

The various embodiments of the present document and the terms used therein are not intended to limit the technical features described in the present document to specific embodiments, and should be understood as including various modifications, equivalents, or substitutes of the corresponding embodiments.

In connection with the description of the drawings, like reference numerals may be used for like or related components.

The singular form of a noun corresponding to an item may include one or more of the item unless the relevant context clearly indicates otherwise.

In the present document, each of phrases such as "A or B," "at least one of A and B," "at least one of A or B," "A, B, or C," "at least one of A, B, and C," and "at least one of A, B, or C" may include any one of the items listed together in the corresponding phrase, or all possible combinations thereof.

The term "and/or" includes a combination of a plurality of related described elements or any one of a plurality of related described elements.

Terms such as "first," "second," "1st," or "2nd" may be used merely to distinguish a corresponding element from another corresponding element, and do not limit the corresponding elements in another aspect (for example, importance or order).

When a certain (for example, first) element is referred to as being "coupled" or "connected" to another (for example, second) element, with or without the terms "functionally" or "communicatively," it means that the certain element may be connected to the other element directly (for example, by wire), wirelessly, or through a third element.

Terms such as "include" or "have" are intended to specify the presence of features, numbers, steps, operations, elements, components, parts, or combinations thereof described in the present document, and do not preclude the existence or addition possibility of one or more other features, numbers, steps, operations, components, parts, or combinations thereof.

When a certain element is said to be "connected," "coupled," "supported," or "in contact" with another element, this includes not only a case in which the elements are directly connected, coupled, supported, or in contact, but also a case in which the elements are indirectly connected, coupled, supported, or in contact through a third element.

When a certain element is said to be located "on" another element, this includes not only a case in which the certain element is in contact with the other element, but also a case in which another element exists between the two elements.

An air conditioner according to various embodiments may refer to an apparatus that performs functions such as air purification, ventilation, humidity control, cooling, or heating in an air-conditioned space (hereinafter, referred to as "indoor space"), and refers to an apparatus having at least one of these functions.

According to an embodiment, the air conditioner may include a heat pump apparatus to perform a cooling function or a heating function. The heat pump apparatus may include a refrigeration cycle in which refrigerant circulates along a compressor, a first heat exchanger, an expansion apparatus, and a second heat exchanger. All components of the heat pump apparatus may be embedded in a single housing forming the exterior of the air conditioner, and a window-type air conditioner or a portable air conditioner corresponds to such an air conditioner. On the other hand, some components of the heat pump apparatus may be separately embedded in a plurality of housings forming one air conditioner, and a wall-mounted air conditioner, a stand-type air conditioner, and a system air conditioner are included therein.

An air conditioner including a plurality of housings may include at least one outdoor unit installed outdoors and at least one indoor unit installed indoors. As an example, the air conditioner may be configured such that one outdoor unit and one indoor unit are connected through a refrigerant pipe. As an example, the air conditioner may be configured such that one outdoor unit is connected to two or more indoor units through a refrigerant pipe. As an example, the air conditioner may be configured such that two or more outdoor units and two or more indoor units are connected through a plurality of refrigerant pipes.

The outdoor unit may be electrically connected to the indoor unit. For example, information (or a command) for controlling the air conditioner may be input through an input interface provided in the outdoor unit or the indoor unit, and the outdoor unit and the indoor unit may operate simultaneously or sequentially in response to a user input.

The air conditioner may include an outdoor heat exchanger provided in the outdoor unit, an indoor heat exchanger provided in the indoor unit, and a refrigerant pipe connecting the outdoor heat exchanger and the indoor heat exchanger.

The outdoor heat exchanger may perform heat exchange between refrigerant and outdoor air by using a phase change (for example, evaporation or condensation) of the refrigerant. For example, while the refrigerant is condensed in the outdoor heat exchanger, the refrigerant may release heat to outdoor air, and while the refrigerant flowing through the outdoor heat exchanger evaporates, the refrigerant may absorb heat from outdoor air.

The indoor unit is provided indoors. As an example, the indoor unit may be classified into a ceiling-type indoor unit, a stand-type indoor unit, a wall-mounted indoor unit, or the like according to an installation method. As an example, the ceiling-type indoor unit may be classified into a 4-way indoor unit, a 1-way indoor unit, a duct-type indoor unit, or the like according to a manner in which air is blown.

Likewise, the indoor heat exchanger may perform heat exchange between refrigerant and indoor air by using a phase change (for example, evaporation or condensation) of the refrigerant. For example, while the refrigerant evaporates in the indoor unit, the refrigerant may absorb heat from indoor air, and the indoor space may be cooled by blowing cooled indoor air while passing through the cooled indoor heat exchanger. In addition, while the refrigerant is condensed in the indoor heat exchanger, the refrigerant may release heat to the indoor air, and the indoor space may be heated by blowing heated indoor air while passing through the high-temperature indoor heat exchanger.

In other words, the air conditioner performs a cooling function or a heating function through a phase change process of refrigerant circulating through the outdoor heat exchanger and the indoor heat exchanger, and for such circulation of refrigerant, the air conditioner may include a compressor for compressing refrigerant. The compressor may suck refrigerant gas through a suction portion, and may compress the refrigerant gas. The compressor may discharge high-temperature and high-pressure refrigerant gas through a discharge portion. The compressor may be disposed inside the outdoor unit.

The refrigerant may circulate in the order of the compressor, the outdoor heat exchanger, the expansion apparatus, and the indoor heat exchanger through the refrigerant pipe, or may circulate in the order of the compressor, the indoor heat exchanger, the expansion apparatus, and the outdoor heat exchanger.

As an example, when one outdoor unit and one indoor unit are directly connected through a refrigerant pipe, the refrigerant may be configured to circulate between the one outdoor unit and the one indoor unit through the refrigerant pipe.

As an example, when the air conditioner is configured such that one outdoor unit is connected to two or more indoor units through a refrigerant pipe, the refrigerant may flow to the plurality of indoor units through refrigerant pipes branched from the outdoor unit. The refrigerant flowing from the plurality of indoor units may be merged and configured to circulate to the outdoor unit. As an example, the plurality of indoor units may each be directly connected in parallel to one outdoor unit through separate refrigerant pipes.

The plurality of indoor units may be independently operated according to operation modes respectively set by a user. In other words, some of the plurality of indoor units may be operated in a cooling mode, while others may simultaneously be operated in a heating mode. In this case, the refrigerant may be selectively introduced into each indoor unit in a high-pressure state or a low-pressure state along a designated circulation path through a flow path switching valve to be described later, and may be blown and configured to circulate to the outdoor unit.

As an example, when two or more outdoor units and two or more indoor units are connected through a plurality of refrigerant pipes, refrigerant blowing from the plurality of outdoor units may be merged and flow through one refrigerant pipe and then be branched again at a certain point and introduced into the plurality of indoor units.

All of the plurality of outdoor units may be driven or at least some thereof may not be driven according to an operation load corresponding to an operation amount of the plurality of indoor units. In this case, the refrigerant may be configured to be introduced into and circulated through outdoor units selectively operated through a flow path switching valve. The air conditioner may include an expansion apparatus for lowering pressure of refrigerant introduced into a heat exchanger. As an example, the expansion apparatus may be disposed inside the indoor unit or inside the outdoor unit, and may be disposed in both.

As an example, the expansion apparatus may lower temperature and pressure of refrigerant using a throttling effect. The expansion apparatus may include an orifice capable of reducing a cross-sectional area of a flow path. Refrigerant passing through the orifice may have reduced temperature and pressure.

As an example, the expansion apparatus may be implemented as an electronic expansion valve capable of adjusting an opening ratio (a ratio of a cross-sectional area of a flow path of a valve in a partially open state with respect to a cross-sectional area of a flow path of the valve in a fully open state). The amount of refrigerant passing through the expansion apparatus may be controlled depending on the opening ratio of the electronic expansion valve.

The air conditioner may further include a flow path switching valve disposed on a refrigerant circulation flow path. The flow path switching valve may include, for example, a 4-way valve. The flow path switching valve may determine a circulation path of refrigerant depending on an operation mode (for example, cooling operation or heating operation) of the indoor unit. The flow path switching valve may be connected to the discharge portion of the compressor.

The air conditioner may include an accumulator. The accumulator may be connected to the suction portion of the compressor. Low-temperature and low-pressure refrigerant evaporated in the indoor heat exchanger or the outdoor heat exchanger may be introduced into the accumulator.

When refrigerant in which refrigerant liquid and refrigerant gas are mixed is introduced, the accumulator may separate the refrigerant liquid from the refrigerant gas and may provide the refrigerant gas from which the refrigerant liquid has been separated to the compressor.

An outdoor fan may be provided adjacent to the outdoor heat exchanger. The outdoor fan may blow outdoor air to the outdoor heat exchanger such that heat exchange between the refrigerant and the outdoor air is promoted.

The outdoor unit of the air conditioner may include at least one sensor. As an example, the sensor of the outdoor unit may be provided as an environmental sensor. The outdoor unit sensor may be disposed at any location inside or outside the outdoor unit. As an example, the outdoor unit sensor may include, for example, a temperature sensor for sensing air temperature around the outdoor unit, a humidity sensor for sensing air humidity around the outdoor unit, a refrigerant temperature sensor for sensing temperature of refrigerant in a refrigerant pipe passing through the outdoor unit, or a refrigerant pressure sensor for sensing pressure of refrigerant in a refrigerant pipe passing through the outdoor unit.

The outdoor unit of the air conditioner may include an outdoor unit communicator. The outdoor unit communicator may be configured to receive a control signal from a controller of the indoor unit of the air conditioner to be described later. The outdoor unit may control operations of the compressor, the outdoor heat exchanger, the expansion apparatus, the flow path switching valve, the accumulator, or the outdoor fan based on the control signal received through the outdoor unit communicator. The outdoor unit may transmit a sensing value detected by the outdoor unit sensor to the controller of the indoor unit through the outdoor unit communicator.

The indoor unit of the air conditioner may include a housing, a blower for circulating air into or out of the housing, and an indoor heat exchanger for heat-exchanging with air introduced into the housing.

The housing may include an inlet. Indoor air may be introduced into the housing through the inlet.

The indoor unit of the air conditioner may include a filter configured to filter foreign substances in air introduced into the housing through the inlet.

The housing may include an outlet. Air flowing inside the housing may be discharged to the outside of the housing through the outlet.

The housing of the indoor unit may be provided with an airflow guide for guiding a direction of air discharged through the outlet. As an example, the airflow guide may include a blade positioned on the outlet. As an example, the airflow guide may include an auxiliary fan for controlling discharged airflow. However, the present disclosure is not limited thereto, and the airflow guide may be omitted.

Inside the housing of the indoor unit, the indoor heat exchanger and the blower may be provided on a flow path connecting the inlet and the outlet.

The blower may include an indoor fan and a fan motor. As an example, the indoor fan may include an axial fan, a mixed-flow fan, a cross-flow fan, or a centrifugal fan.

The indoor heat exchanger may be disposed between the blower and the outlet, or may be disposed between the inlet and the blower. The indoor heat exchanger may absorb heat from air introduced through the inlet, or may transfer heat to air introduced through the inlet. The indoor heat exchanger may include a heat exchange pipe through which refrigerant flows and a heat exchange fin in contact with the heat exchange pipe to increase a heat transfer area.

The indoor unit of the air conditioner may include a drain tray disposed below the indoor heat exchanger and configured to collect condensate generated from the indoor heat exchanger. The condensate accommodated in the drain tray may be drained to the outside through a drain hose. The drain tray may be configured to support the indoor heat exchanger.

The indoor unit of the air conditioner may include an input interface. The input interface may include any type of user input means including a button, a switch, a touch screen, and/or a touch pad. A user may directly input setting data (for example, a desired indoor temperature, an operation mode setting for cooling/heating/dehumidification/air purification, an air vent selection setting, and/or an airflow amount setting) through the input interface.

The input interface may also be connected to an external input apparatus. For example, the input interface may be electrically connected to a wired remote controller. The wired remote controller may be installed at a specific location in an indoor space (for example, a portion of a wall surface). A user may input setting data regarding operation of the air conditioner by manipulating the wired remote controller. An electrical signal corresponding to the setting data obtained through the wired remote controller may be transmitted to the input interface. In addition, the input interface may include an infrared sensor. A user may remotely input setting data regarding operation of the air conditioner by using a wireless remote controller. The setting data input through the wireless remote controller may be transmitted to the input interface as an infrared signal.

In addition, the input interface may include a microphone. A user's voice command may be obtained through the microphone. The microphone may convert the user's voice command into an electrical signal, and may transmit the converted electrical signal to an indoor unit controller. The indoor unit controller may control components of the air conditioner to execute a function corresponding to the user's voice command. The setting data obtained through the input interface (for example, a desired indoor temperature, an operation mode setting for cooling/heating/dehumidification/air purification, an air vent selection setting, and/or an airflow amount setting) may be transmitted to the indoor unit controller to be described later. As an example, the setting data obtained through the input interface may be transmitted to the outside, that is, to the outdoor unit or a server, through an indoor unit communicator to be described later.

The indoor unit of the air conditioner may include a power module. The power module may be connected to an external power source and may supply power to components of the indoor unit.

The indoor unit of the air conditioner may include an indoor unit sensor. The indoor unit sensor may be an environmental sensor disposed in a space inside or outside the housing. As an example, the indoor unit sensor may include one or more temperature sensors and/or humidity sensors disposed in a predetermined space inside or outside the housing of the indoor unit. As an example, the indoor unit sensor may include a refrigerant temperature sensor for sensing temperature of refrigerant in a refrigerant pipe passing through the indoor unit. As an example, the indoor unit sensor may include respective refrigerant temperature sensors for sensing an inlet temperature, an intermediate temperature, and/or an outlet temperature of a refrigerant pipe passing through the indoor heat exchanger.

As an example, each piece of environmental information sensed by the indoor unit sensor may be transmitted to the indoor unit controller to be described later, or may be transmitted to the outside through the indoor unit communicator to be described later.

The indoor unit of the air conditioner may include an indoor unit communicator. The indoor unit communicator may include at least one of a short-range communication module or a long-range communication module. The indoor unit communicator may include at least one antenna for wirelessly communicating with another apparatus. The outdoor unit may include an outdoor unit communicator. The outdoor unit communicator may also include at least one of a short-range communication module or a long-range communication module.

The short-range wireless communication module may include, but is not limited to, a Bluetooth communication module, a Bluetooth Low Energy (BLE) communication module, a Near Field Communication (NFC) module, a Wireless Local Area Network (WLAN) communication module, a Zigbee communication module, an Infrared Data Association (IrDA) communication module, a Wi-Fi Direct (WFD) communication module, an Ultra-Wideband (UWB) communication module, an Ant+ communication module, a microwave (uWave) communication module, and the like.

The long-range communication module may include a communication module configured to perform various types of long-range communication, and may include a mobile communication unit. The mobile communication unit transmits and receives wireless signals to and from at least one of a base station, an external terminal, or a server over a mobile communication network.

The indoor unit communicator may perform communication with an external apparatus such as a server, a mobile apparatus, or another home appliance through a nearby access point (AP). The access point (AP) may connect a local area network (LAN), to which the air conditioner or a user apparatus is connected, to a wide area network (WAN), to which the server is connected. The air conditioner or the user apparatus may be connected to the server through the wide area network (WAN). The indoor unit of the air conditioner may include an indoor unit controller for controlling components of the indoor unit including a blower and the like. The outdoor unit of the air conditioner may include an outdoor unit controller for controlling components of the outdoor unit including a compressor and the like. The indoor unit controller may perform communication with the outdoor unit controller through the indoor unit communicator and the outdoor unit communicator. The outdoor unit communicator may transmit a control signal generated by the outdoor unit controller to the indoor unit communicator, or may transfer a control signal transmitted from the indoor unit communicator to the outdoor unit controller. In other words, the outdoor unit and the indoor unit may perform bidirectional communication. The outdoor unit and the indoor unit may transmit and receive various signals generated during operation of the air conditioner.

The outdoor unit controller may be electrically connected to components of the outdoor unit, and may control operations of the respective components. For example, the outdoor unit controller may adjust a frequency of the compressor, and may control the flow path switching valve such that a circulation direction of refrigerant is switched. The outdoor unit controller may adjust a rotational speed of the outdoor fan. In addition, the outdoor unit controller may generate a control signal for adjusting an opening degree of the expansion valve. Under control of the outdoor unit controller, refrigerant may circulate along a refrigerant circulation circuit including the compressor, the flow path switching valve, the outdoor heat exchanger, the expansion valve, and the indoor heat exchanger.

Various temperature sensors included in the outdoor unit and the indoor unit may respectively transmit electrical signals corresponding to detected temperatures to the outdoor unit controller and/or the indoor unit controller. For example, humidity sensors included in the outdoor unit and the indoor unit may respectively transmit electrical signals corresponding to detected humidity to the outdoor unit controller and/or the indoor unit controller.

The indoor unit controller may obtain a user input from a user apparatus including a mobile apparatus through the indoor unit communicator, and may obtain a user input directly through the input interface or through a remote controller. The indoor unit controller may control components of the indoor unit including the blower and the like in response to the received user input. The indoor unit controller may transmit information regarding the received user input to the outdoor unit controller of the outdoor unit.

The outdoor unit controller may control components of the outdoor unit including the compressor and the like based on the information regarding the user input received from the indoor unit. For example, when a control signal corresponding to a user input for selecting an operation mode such as a cooling operation, a heating operation, a blowing operation, a defrost operation, or a dehumidification operation is received from the indoor unit, the outdoor unit controller may control the components of the outdoor unit such that an operation of the air conditioner corresponding to the selected operation mode is performed.

The outdoor unit controller and the indoor unit controller may each include a processor and memory. The indoor unit controller may include at least one first processor and at least one first memory, and the outdoor unit controller may include at least one second processor and at least one second memory.

The memory may store various types of information necessary for operation of the air conditioner. The memory may store instructions, applications, data, and/or programs necessary for operation of the air conditioner. For example, the memory may store various programs for a cooling operation, a heating operation, a dehumidification operation, and/or a defrost operation of the air conditioner. The memory may include volatile memory such as a Static Random Access Memory (S-RAM) and a Dynamic Random Access Memory (D-RAM) for temporarily storing data. In addition, the memory may include non-volatile memory such as a Read Only Memory (ROM), an Erasable Programmable Read Only Memory (EPROM), and an Electrically Erasable Programmable Read Only Memory (EEPROM) for storing data for a long period of time.

The processor may generate a control signal for controlling operation of the air conditioner based on instructions, applications, data, and/or programs stored in the memory. The processor may be hardware, and may include a logic circuit and an arithmetic circuit. The processor may process data according to a program and/or instructions provided from the memory, and may generate a control signal according to a processing result. The memory and the processor may be implemented as a single control circuit or as a plurality of circuits.

The indoor unit of the air conditioner may include an output interface. The output interface may be electrically connected to the indoor unit controller, and may output information related to operation of the air conditioner under control of the indoor unit controller. For example, information such as an operation mode, an airflow direction, an airflow amount, and a temperature selected by a user may be output. In addition, the output interface may output sensing information obtained from the indoor unit sensor or the outdoor unit sensor, and may output a warning/error message.

The output interface may include a display and a speaker. The speaker, as an audio apparatus, may output various sounds. The display may display information input by a user or information provided to the user using various graphic elements. For example, operation information of the air conditioner may be displayed as at least one of an image or text. In addition, the display may include an indicator providing specific information. The display may include a Liquid Crystal Display (LCD) panel, a Light Emitting Diode (LED) panel, an Organic Light Emitting Diode (OLED) panel, a micro LED panel, and/or a plurality of LEDs.

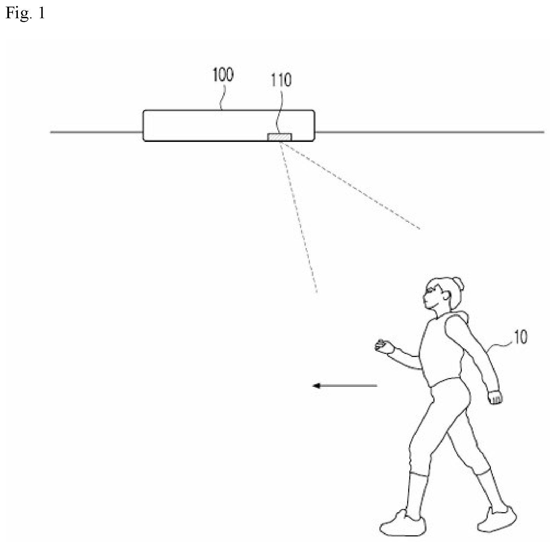

FIG. 1 is a view illustrating a situation in which an electronic apparatus identifies a user according to at least one embodiment.

In the present disclosure, the electronic apparatus 100 may include various types of home appliances including a motion detection sensor 110.

For example, the electronic apparatus 100 may include various types of air conditioners including the motion detection sensor 110.

For example, the electronic apparatus 100 may include a ceiling-type indoor unit, a stand-type indoor unit, a wall-mounted indoor unit, or the like. In addition, although the present disclosure will be described based on a 1-way type indoor unit, the present disclosure is not limited thereto, and a 4-way type indoor unit may also be included.

In addition, the electronic apparatus 100 may include an indoor unit and an outdoor unit. In this case, the electronic apparatus 100 may be located in various places such as a house, an office, a store, or a restaurant.

Further, the indoor unit and the outdoor unit may be connected through a pipe. Refrigerant may circulate between the indoor unit and the outdoor unit through the pipe.

The indoor unit may blow air. To this end, the indoor unit may include a heat exchanger for heat-exchanging air suctioned into the indoor unit through an inlet with refrigerant, a fan for blowing the heat-exchanged air through a blower, and the like. The outdoor unit may include a compressor for compressing refrigerant, a heat exchanger for heat-exchanging refrigerant with outdoor air, a fan for introducing outdoor air into the heat exchanger and blowing the heat-exchanged air to the outside, and the like.

Meanwhile, the electronic apparatus 100 may further include an expansion valve for expanding refrigerant. In this case, the expansion valve may be disposed in the indoor unit or the outdoor unit.

Accordingly, during a cooling operation, the indoor unit may control a temperature of a space in which the indoor unit is located by vaporizing refrigerant supplied from the outdoor unit and accordingly, blowing air having a lowered temperature to the outside.

In addition, the indoor unit may perform communication with the outdoor unit. For example, the indoor unit may transmit a signal for controlling the outdoor unit to the outdoor unit. The outdoor unit may control various operations of components of the outdoor unit based on the signal received from the indoor unit.

The above-described configurations of the indoor unit and the outdoor unit are merely examples for describing operations of the indoor unit and the outdoor unit. In other words, the indoor unit and the outdoor unit may further include various configurations for performing a cooling function in addition to the above-described configurations, and may provide cold air through various methods. In addition, the electronic apparatus 100 according to the present disclosure may include the indoor unit.

After being turned on, the electronic apparatus 100 may identify whether an object 10 and the electronic apparatus 100 are present in the same space by using the built-in motion detection sensor 110. The object may include, for example, a movable object that is present in a space in which the electronic apparatus 100 is located, such as a person or a pet.

A case may occur in which, even though the object 10 is not present in the space, the object 10 is incorrectly identified by the motion detection sensor 110 as being present in the space. Therefore, when the electronic apparatus 100 determines that the object 10 is present in the space merely because the object is detected by the motion detection sensor 110, accuracy may be reduced.

The electronic apparatus 100 according to the present disclosure may determine whether the object 10 is present in the space by considering the number of time periods during which the object 10 is not detected within a preset time and a speed of the object 10 when the object 10 is detected. Accordingly, accuracy of recognition of the object 10 by the electronic apparatus 100 may be improved.

In the following description, a state in which the object 10 and the electronic apparatus 100 are present in the same space is expressed as an occupied state, and a state in which the object 10 and the electronic apparatus 100 are not present in the same space is expressed as an absent state.

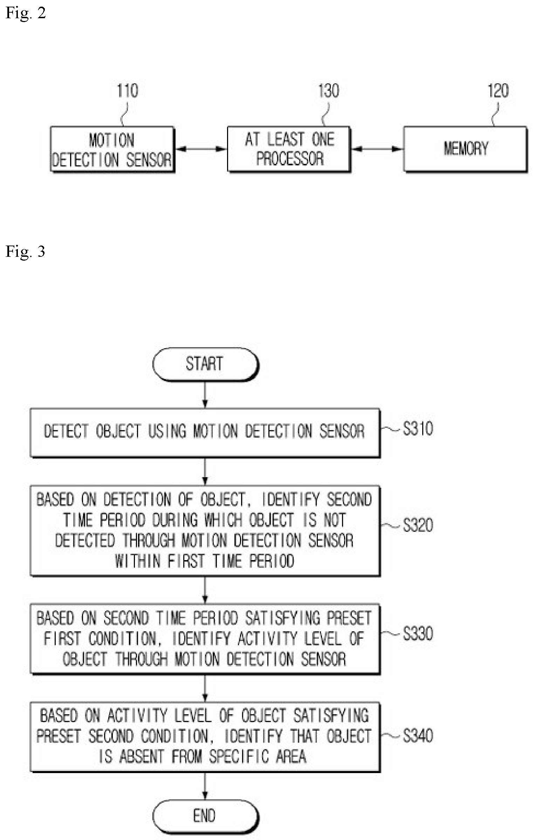

FIG. 2 is a block diagram provided to explain a configuration of an electronic apparatus according to at least one embodiment.

Referring to FIG. 2, the electronic apparatus 100 according to the present disclosure may include the motion detection sensor 110, memory 120, and at least one processor 130.

The motion detection sensor 110 may detect an object. For example, detecting an object by the motion detection sensor 110 may include detecting presence of the object and a speed of the object. For example, the motion detection sensor 110 may be disposed outside a housing of the electronic apparatus 100 or may be disposed inside the housing to be exposed to the outside of the housing.

The motion detection sensor 110 may be implemented as an infrared sensor, an ultrasonic sensor, a microwave sensor, an image sensor, a radar sensor, a lidar sensor, or the like. Hereinafter, the motion detection sensor 110 according to the present disclosure will be described on the assumption that the motion detection sensor 110 is a radar sensor.

The motion detection sensor 110 may detect an object based on a Signal-to-Noise Ratio (SNR).

The motion detection sensor 110 may include a plurality of transmitting and receiving antennas. For example, the motion detection sensor 110 may include one transmitting antenna and a plurality of receiving antennas. However, the present disclosure is not limited thereto, and the numbers of transmitting antennas and receiving antennas may vary. The motion detection sensor 110 may transmit a signal to the outside of the electronic apparatus 100 using the transmitting antenna, and when the signal transmitted from the transmitting antenna is reflected by an object and received by the receiving antenna, may calculate a ratio between intensity of the received signal and intensity of noise (for example, a signal-to-noise ratio). In this case, when the ratio between the intensity of the signal and the intensity of the noise is greater than or equal to a preset value, the motion detection sensor 110 may identify that the object is detected. On the other hand, when the ratio between the intensity of the signal and the intensity of the noise is less than the preset value, the motion detection sensor 110 may identify that the object 10 is not detected.

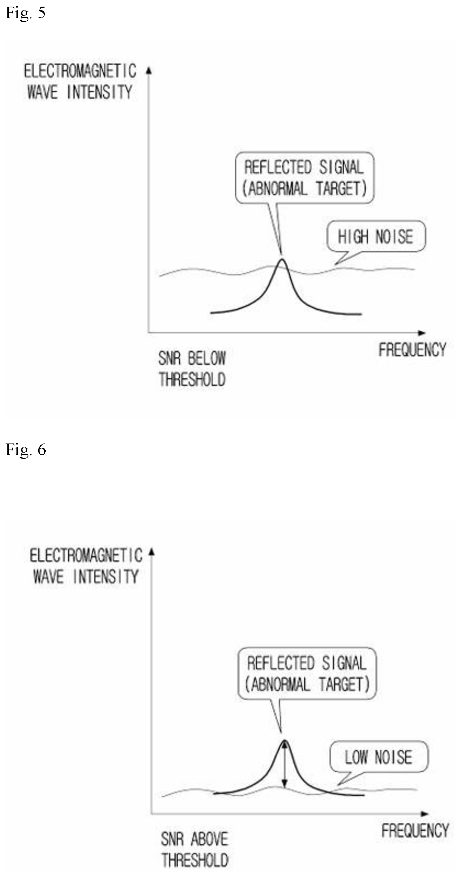

Although the motion detection sensor 110 detects an object based on the signal-to-noise ratio, the motion detection sensor 110 may incorrectly detect that the object exists even though the object does not actually exist, depending on intensity of noise. This will be described later based on FIGS. 5 to 6.

The memory 120 may store data and programs for controlling an operation of the electronic apparatus 100. For example, the memory 120 may be implemented as memory embedded in the electronic apparatus 100 (for example, volatile memory, non-volatile memory, a hard disk drive (HDD), or a solid state drive (SSD)) according to a purpose of storing data, or may be implemented as memory detachable from the electronic apparatus 100 (for example, a memory card, an external memory, etc.).

For example, the memory 120 may include permanent memory (for example, non-volatile memory), such as a hard disk drive (HDD), flash memory, or read-only memory (ROM), semi-permanent memory (for example, volatile memory), such as random access memory (RAM), any other suitable type of storage (or storage assembly), or any combination thereof.

In addition, one or more instructions may be stored in the memory 120. In this case, one or more processors 130 may perform operations of the electronic apparatus 100 according to various embodiments of the present disclosure by executing the one or more instructions stored in the memory 120. In addition, a program and data for driving the electronic apparatus 100 may be stored in the memory 120. Various software programs and various applications for operating the electronic apparatus 100 may be stored in the memory 120.

The at least one processor 130 may control overall operations of the electronic apparatus 100. For example, by executing one or more instructions stored in the memory 120 of the electronic apparatus 100, the at least one processor 130 may detect an object using the motion detection sensor 110, identify, based on detection of the object, a second time period during which the object is not detected through the motion detection sensor 110 within a first time period, based on the second time period satisfying a preset first condition, identify an activity level of the object 10 through the motion detection sensor 110, and based on the activity level of the object 10 satisfying a preset second condition, identify that the object 10 is absent from a specific area.

The at least one processor 130 may include one or more of a Central Processing Unit (CPU), a Graphics Processing Unit (GPU), an Accelerated Processing Unit (APU), a Many Integrated Core (MIC), a Digital Signal Processor (DSP), a Neural Processing Unit (NPU), a hardware accelerator, or a machine learning accelerator. The at least one processor 130 may control one or any combination of other components of the electronic apparatus 100, and may perform an operation regarding communication or data processing. The at least one processor 130 may execute one or more programs or instructions stored in the memory 120 of the electronic apparatus 100. For example, by executing one or more instructions stored in the memory 120 of the electronic apparatus 100, the at least one processor 130 may perform a method according to an embodiment of the present disclosure.

When the method according to an embodiment of the present disclosure includes a plurality of operations, the plurality of operations may be performed by one processor or may be performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (for example, a general-purpose processor), and the third operation may be performed by a second processor (for example, an artificial intelligence dedicated processor).

The at least one processor 130 may be implemented as a single core processor including one core, or may be implemented as one or more multicore processors including a plurality of cores (for example, homogeneous multicores or heterogeneous multicores). When the at least one processor 130 is implemented as a multicore processor, each of the plurality of cores included in the multicore processor may include processor internal memory such as cache memory or on-chip memory, and a common cache shared by the plurality of cores may be included in the multicore processor. In addition, each of the plurality of cores included in the multicore processor (or some of the plurality of cores) may independently read and execute program instructions for implementing the method according to an embodiment of the present disclosure, or all (or some) of the plurality of cores may operate in conjunction with one another to read and execute program instructions for implementing a method according to an embodiment of the present disclosure.

When the method according to an embodiment of the present disclosure includes a plurality of operations, the plurality of operations may be performed by one of the plurality of cores included in the multicore processor, or may be performed by the plurality of cores. For example, when a first operation, a second operation, and a third operation are performed by the method according to an embodiment, all of the first operation, the second operation, and the third operation may be performed by a first core included in the multicore processor, or the first operation and the second operation may be performed by the first core included in the multicore processor and the third operation may be performed by a second core included in the multicore processor.

In embodiments of the present disclosure, the at least one processor 130 may refer to a system on chip (SoC) in which one or more processors and other electronic components are integrated, a single core processor, a multicore processor, or a core included in a single core processor or a multicore processor, and the core may be implemented as a CPU, GPU, APU, MIC, DSP, NPU, hardware accelerator, machine learning accelerator, or the like, but embodiments of the present disclosure are not limited thereto. In the following description, the at least one processor 130 is referred to as the processor 130.

The processor 130 may be implemented as one or more integrated circuit (IC) or circuitry chips, and may execute various data processing. The processor 130 may include at least one electrical circuit, and may individually or collectively distributed-process instructions (or programs, data, etc.) stored in the memory 120. The processor 130 may include a processor assembly including one or more processing circuits. The processor 130 may include any operative processing circuit for controlling performance and operations of one or more components of the electronic apparatus 100 (for example, the motion detection sensor 110 and/or the memory 120). For example, the processor 130 (for example, an application processor AP) may be implemented as a system on chip (SoC) (for example, one chip or chipset). For example, the processor 130 may be implemented as a plurality of cores (or at least one core circuit), a plurality of chips, or a plurality of chipsets. For example, the processor 130 may include one or more processing circuits. For example, the processor 130 may include one or more processing circuits configured to perform various functions of the present disclosure individually and/or collectively. As a non-limiting example, at least a portion of the processor 130 may be included in a first chip of the electronic apparatus 100, and at least another portion of the processor 130 may be included in a second chip of the electronic apparatus 100 different from the first chip of the electronic apparatus 100.

FIG. 3 is a flowchart provided to explain a control method of an electronic apparatus according to at least one embodiment. The processor 130 may perform at least one of the operations of FIG. 3. When the instructions stored in the memory 120 of the electronic apparatus 100 are executed individually or collectively by the processor 130 of the electronic apparatus 100, the electronic apparatus 100 may perform the operations of FIG. 3.

In operation S310, the processor 130 may detect the object 10 using the motion detection sensor 110.

As described above, when the signal transmitted from the transmitting antenna of the motion detection sensor 110 is reflected by an object and received by the receiving antenna, the motion detection sensor 110 may compare a ratio between intensity of the received signal and intensity of noise. The intensity of the signal and the intensity of the noise may be average power of each radio wave. In this case, when the ratio between the intensity of the signal and the intensity of the noise is greater than or equal to a preset value, the motion detection sensor 110 may identify that the object is detected. On the other hand, when the ratio between the intensity of the signal and the intensity of the noise is less than the preset value, the motion detection sensor 110 may identify that the object is not detected. The preset value may have a value of signal intensity/noise intensity = 10⁷. For example, when a value of signal intensity/noise intensity is greater than or equal to 10⁷, the motion detection sensor 110 may identify that the object is detected, and when the value is less than 10⁷, may identify that the object is not detected. The preset value is not limited to 10⁷, and may have various values.

FIGS. 5 and 6 are views provided to explain a case in which a sensor generates a false detection according to at least one embodiment. In the examples of FIGS. 5 and 6, it is assumed that an object is not present in a space.

Referring to FIG. 5, a signal transmitted from the motion detection sensor 110 may be weakly reflected and received by the motion detection sensor 110. In this case, a value of signal intensity/noise intensity obtained by the motion detection sensor 110 may be lower than a preset value. In this case, the motion detection sensor 110 may identify that the object is not detected. The motion detection sensor 110 may generate a signal indicating that the object is not detected. The generated signal may be provided to the processor 130.

On the other hand, referring to FIG. 6, when a noise value is excessively lower than a normal case, a value of signal intensity/noise intensity obtained by the motion detection sensor 110 may be greater than or equal to the preset value. In this case, although the object does not actually exist, the motion detection sensor 110 may generate a signal indicating that the object is detected. The generated signal may be provided to the processor 130.

When such erroneous detection of the motion detection sensor 110 occurs, the motion detection sensor 110 may detect that an object exists only for a short time, not for a continuous time period. Therefore, the processor 130 may identify whether the object is actually not present by considering the number of time periods during which the object is not detected and an activity level of the detected object, instead of determining that the object 10 is present in the space merely because the object is detected by the motion detection sensor 110. This will be described based on operation S320.

In operation S320, the processor 130 may identify, based on detection of the object, a second time period during which the object is not detected through the motion detection sensor 110 in a first time period.

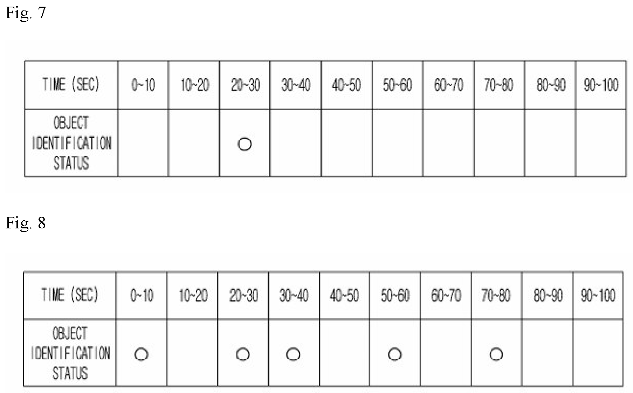

According to an embodiment, the processor 130 may divide the first time period into a plurality of time periods based on a preset length of the second time period. For example, it is assumed that a length of the first time period is 100 seconds, and a length of the preset time period is 10 seconds. In this case, the first time period having the length of 100 seconds may be divided into 10 periods each having a length of 10 seconds. The processor 130 may identify the second time period among the plurality of time periods. The second time period may be a time period during which the object is not detected by the motion detection sensor 110. When the object is detected even once by the motion detection sensor 110 within a time period, the corresponding time period may be a time period during which the object is detected. When the object is continuously not detected by the motion detection sensor 110 during a time period, the corresponding time period may be a time period during which the object is not detected. For example, referring to FIG. 7, the object may be detected by the motion detection sensor 110 only in a section of 20 to 30 seconds among 10 time periods, and the object may not be detected during the remaining 0 to 20 seconds and 30 to 100 seconds. In this case, the processor 130 may identify, among the 10 time periods, a time period of 0 to 10 seconds, a time period of 10 to 20 seconds, a time period of 30 to 40 seconds, a time period of 40 to 50 seconds, a time period of 50 to 60 seconds, a time period of 60 to 70 seconds, a time period of 70 to 80 seconds, a time period of 80 to 90 seconds, and a time period of 90 to 100 seconds as time periods during which the object is not detected.

In operation S330, the processor 130 may identify whether the second time period satisfies a preset first condition.

The preset first condition may include a condition in which the second time period during which the object is not detected in the first time period is greater than or equal to a preset number of times.

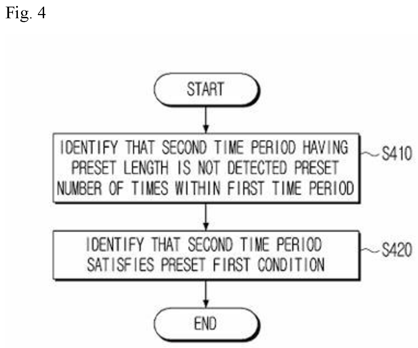

Referring to FIG. 4, in operations S410 and S420, when it is identified that the second time period having a preset length is not detected a preset number of times in the first time period, the processor 130 may identify that the second time period satisfies the preset first condition.

For example, the preset number of times may be six times, but is not limited thereto and may be set to various values. In the example of FIG. 7, the number of time periods during which the object is not detected among the 10 time periods is nine. In this case, the number of time periods during which the object is not detected (for example, nine) may be greater than or equal to a preset number of times. In this case, the processor 130 may identify that the second time period satisfies the preset first condition.

On the other hand, referring to FIG. 8, the object may be detected by the motion detection sensor 110 in a time period of 0 to 10 seconds, a time period of 20 to 30 seconds, a time period of 30 to 40 seconds, a time period of 50 to 60 seconds, and a time period of 70 to 80 seconds among the 10 time periods, and the object may not be detected during a time period of 10 to 20 seconds, a time period of 40 to 50 seconds, a time period of 60 to 70 seconds, and a time period of 80 to 100 seconds. In this case, the number of time periods during which the object is not detected is five. In this case, the number of time periods during which the object is not detected (for example, five) may be less than a preset number of times. In this case, the processor 130 may identify that the second time period does not satisfy the preset first condition.

In operation S330, when the processor 130 identifies that the second time period satisfies the preset first condition, the processor 130 may identify an activity level of the object through the motion detection sensor 110.

According to an embodiment, the processor 130 may identify the activity level of the object in a time period during which the object is detected among the plurality of time periods. For example, the activity level of the object may include a moving speed of the object.

As described above, a signal transmitted from the transmitting antenna of the motion detection sensor 110 may be reflected by the object and received by the receiving antenna. The motion detection sensor 110 may detect the object based on a signal-to-noise ratio of the received signal. In this case, the processor 130 may identify a distance between the electronic apparatus 100 and the object based on a difference between a time at which the motion detection sensor 110 transmits the signal and a time at which the transmitted signal is reflected by the object and received. The processor 130 may identify a coordinate value of the object based on an angle of a signal received by the plurality of receiving antennas, the distance between the electronic apparatus 100 and the object 10, and the angle of the received signal. In addition, the coordinate value may use a unit of centimeters (cm). Accordingly, the coordinate value may indicate how many centimeters the object is away from the electronic apparatus 100.

In addition, the processor 130 may identify a moving speed of the object based on the coordinate value. Specifically, the processor 130 may calculate a variation amount of the coordinate value of the object to identify the moving speed of the object and thereby identify the activity level of the object.

In operation S340, the processor 130 may identify that the object is absent from a specific area based on the activity level of the object satisfying a preset second condition.

The preset second condition may include a condition in which the object has not moved at a moving speed greater than or equal to a preset magnitude for at least a preset period of time. Accordingly, when the processor 130 identifies, based on the moving speed of the object, that the object has not moved at a moving speed greater than or equal to the preset magnitude for at least the preset period of time, the processor 130 may identify that the activity level of the object satisfies the preset second condition.

In this case, the preset period of time may be 3 seconds, and the preset moving speed of the object may be 15 cm/1.5 sec. However, the present disclosure is not limited thereto, and the preset period of time and the moving speed may have various values.

For example, when the detected object moves at a speed less than the preset magnitude, or when the object moves at a speed greater than or equal to the preset magnitude but a moving time of the object is less than the preset period of time, the processor 130 may identify that the activity level of the object satisfies the preset second condition.

For example, when the detected object is detected as moving at a speed less than 15 cm/1.5 sec, the processor 130 may identify that the activity level of the object satisfies the second condition. In addition, when the detected object is detected as moving at a speed greater than or equal to 15 cm/1.5 sec but the moving time is less than 3 seconds, the processor 130 may identify that the activity level of the object satisfies the second condition.

On the other hand, when the detected object is detected for at least the preset period of time, and moves at a speed greater than or equal to the preset moving speed, the processor 130 may identify that the activity level of the object does not satisfy the preset second condition. In addition, the processor 130 may determine whether the activity level of the object satisfies the second condition during the first time period.

For example, when the detected object is detected as having a moving time of at least 3 seconds, and moving at a speed greater than or equal to 15 cm/1.5 sec during 100 seconds, the processor 130 may identify that the activity level of the object does not satisfy the second condition.

In addition, when the detected object 10 is detected as having moved at a speed greater than or equal to the preset magnitude but the moving time is less than the preset period of time, the processor 130 may identify that the activity level of the object does not satisfy the second condition.

For example, when the detected object 10 has moved at a speed greater than or equal to 15 cm/1.5 sec but the moving time is detected as being less than 3 seconds, the processor 130 may identify that the activity level of the object does not satisfy the second condition.

In addition, the specific area may refer to a space in which the electronic apparatus 100 is located. Accordingly, when the processor 130 identifies that the object 10 satisfies the first condition and the second condition, the processor 130 may identify that the object 10 is not present in the specific area.

On the other hand, the processor 130 may identify that the object 10 is present in the specific area based on the activity level of the object not satisfying the preset second condition. In other words, even when the object 10 satisfies the first condition, if the activity level of the object does not satisfy the second condition, the processor 130 may identify that the object 10 is present in the specific area.

In addition, when the object is not detected during the first time period, the processor 130 may identify that the first condition is satisfied and may not consider the second condition. In this case, since the object is not detected during the first time period, the processor 130 may identify that the object is not present in the specific area without considering whether the activity level of the object satisfies the second condition.

On the other hand, when the object 10 does not satisfy the first condition, the processor 130 may identify that the object 10 is present in the specific area.

As described above, the processor 130 may identify whether the object satisfies the first condition during the first time period and whether the activity level of the object satisfies the second condition.

At this time, when the processor 130 identifies that the object 10 does not satisfy the first condition during the first time period, the processor 130 may delete measurement data from a point in time at which detection of presence of the object started to a time corresponding to the second time period. In addition, the processor 130 may identify whether the object satisfies the first condition and whether the activity level of the object satisfies the second condition from a time at which the measurement data is deleted until a point in time after the first time period.

For example, it is assumed that the first time period is 100 seconds and the second time period is 10 seconds.

When the object does not satisfy the first condition during an initial 100 seconds, the processor 130 may delete measurement data of the initial 10 seconds. In this case, the processor 130 may obtain data from 10 seconds after starting detection of presence of the object to the next 100 seconds, that is, data up to 110 seconds based on a point in time that is 10 seconds after a point in time at which measurement started. Based on the obtained data, the processor 130 may identify whether the object satisfies the first condition and whether the activity level of the object satisfies the second condition.

In addition, when the processor 130 identifies that the object 10 is absent, the processor 130 may change a mode of the electronic apparatus 100 from an occupancy mode to a power-saving mode.

The occupancy mode may be a state in which the electronic apparatus 100 normally operates after a user turns on the electronic apparatus 100. The occupancy mode may perform an operation on the premise that the object 10 is located in the same space as the electronic apparatus 100.

The power-saving mode may be a mode used by the electronic apparatus 100 to save energy, and may be a mode for extending battery life or reducing power consumption by reducing power when the electronic apparatus 100 is not being used. Accordingly, when the processor 130 determines that the object is absent, the processor 130 may switch the mode of the electronic apparatus 100 to the power-saving mode to reduce power consumption of the electronic apparatus 100.

In addition, the above-described operations of the processor 130 may be performed by a plurality of processors 130.

Specifically, a motion detection sensor 110 and a sub-processor may be attached to a panel of the electronic apparatus 100. In addition, a main processor may be attached inside the electronic apparatus 100.

The motion detection sensor 110, the sub-processor, and the main processor may be connected to each other through wires and may perform wired communication.

In addition to detecting an object, the motion detection sensor 110 may identify a coordinate value of the object based on a distance from the electronic apparatus 100 to the object and a reception angle of a reflected radar signal. In addition, the coordinate value may use a unit of centimeters (cm). Accordingly, the coordinate value may indicate how many centimeters the object is away from the electronic apparatus 100.

The motion detection sensor 110 may transmit the identified information to the sub-processor every preset first period of time. The preset first period of time may be 0.15 seconds, but is not limited thereto and may have various values.

Specifically, the motion detection sensor 110 may transmit information regarding whether the object is detected to the sub-processor. In addition, the motion detection sensor 110 may transmit a coordinate value of the object and a distance value from the electronic apparatus 100 to the object to the sub-processor. The motion detection sensor 110 may detect up to three objects, and may transmit a coordinate value and a distance value of each object to the sub-processor. The maximum number of objects that may be detected by the motion detection sensor 110 is not limited thereto, and a greater number of objects may be detected.

The sub-processor may determine a speed of the object based on the information received from the motion detection sensor 110, and may determine whether the object is in an occupied state.

Specifically, the sub-processor may receive information regarding whether the object is detected from the motion detection sensor 110 at the preset first time interval.

When information regarding whether the object is detected is received from the motion detection sensor 110 a first preset number of times, the sub-processor may identify that the object exists when a number of times that the object is detected among the first preset number of times is greater than or equal to a second preset number of times.

For example, it is assumed that the first preset number of times is 10, and the second preset number of times is 8.

The sub-processor may receive information regarding whether the object is detected ten times from the motion detection sensor 110 at intervals of 0.15 seconds.

When the number of times that the object is detected among the received ten pieces of information is greater than or equal to eight, the sub-processor may identify that the object exists.

On the other hand, when the number of times that the object is detected among the first preset number of times is less than the second preset number of times, the sub-processor may identify that the object does not exist.

For example, when the number of times that the object is detected among the received ten pieces of information is less than eight, the sub-processor may identify that the object does not exist.

In addition, since the sub-processor has received information regarding whether the object is detected the first preset number of times at the preset first time interval, the sub-processor may identify that the object has existed for a period corresponding to the preset first time interval multiplied by the first preset number of times.

For example, it is assumed that the sub-processor receives information regarding whether the object is detected ten times from the motion detection sensor 110 at intervals of 0.15 seconds, and that the object is detected eight or more times.

In this case, the sub-processor may identify that the object exists for 1.5 seconds.

In the present disclosure, the fact that the object is detected once may mean that the object is identified during a period corresponding to the preset first time interval multiplied by the first preset number of times.

The sub-processor may improve accuracy of object detection by identifying whether the object exists based on a plurality of pieces of information transmitted from the motion detection sensor 110 to the sub-processor.

However, even with such a method, erroneous detection due to a ghost phenomenon may occur, and thus whether the object actually exists may be identified through the above-described method.

The sub-processor may identify whether the object exists, and may transmit information to the main processor every preset second period of time.

The preset second period of time may be 1 second, but is not limited thereto and may have various values. In addition, the information may include the number of identified objects and an average value of speeds of the objects.

Further, the average value of the speeds of the objects may be an average value of speeds of the objects transmitted by the motion detection sensor 110 to the sub-processor the first preset number of times.

For example, the sub-processor may transmit information to the main processor every second.

In addition, the sub-processor may calculate an average speed of the object during a period corresponding to the preset first time interval multiplied by the first preset number of times and may transmit the calculated average speed to the main processor.

Accordingly, every second, the sub-processor may transmit, to the main processor, information regarding the average speed of the object during the period corresponding to the preset first time interval multiplied by the first preset number of times and the number of identified objects.

The main processor may control the electronic apparatus 100 based on a command of the sub-processor.

Specifically, when the object is identified as being in an occupied state, the main processor may control a fan included in the electronic apparatus 100 to blow air.

On the other hand, when the object is identified as being in an absent state, the main processor may control the fan included in the electronic apparatus 100 not to blow air or to blow a reduced amount of air.

In addition, in the above-described example, a plurality of motion detection sensors 110 may be provided. When the plurality of motion detection sensors 110 are attached to the electronic apparatus 100, accuracy of identification may be improved by eliminating a blind spot that may occur when only one motion detection sensor 110 is provided.

Meanwhile, various embodiments of the present disclosure may be implemented in a recording medium readable by a computer or a similar apparatus using software, hardware, or a combination thereof. In some cases, embodiments described herein may be implemented by the processor itself. According to a software implementation, embodiments such as procedures and functions described herein may be implemented as separate software modules. Each of the software modules may perform one or more functions and operations described herein.

Meanwhile, computer instructions for performing processing operations of the electronic apparatus 100 according to the various embodiments of the present disclosure described above may be stored in a non-transitory computer-readable medium. When executed by a processor of a specific apparatus, the computer instructions stored in the non-transitory computer-readable medium cause the specific apparatus to perform the processing operations in the electronic apparatus 100 according to the various embodiments described above.

The non-transitory computer-readable medium refers not to a medium that stores data for a short period of time, such as a register, a cache, or a memory, but to a medium that stores data semi-permanently and is readable by an apparatus. Specific examples of the non-transitory computer-readable medium may include a CD, a DVD, a hard disk, a Blu-ray disc, a USB, a memory card, a ROM, and the like.

Although the present invention has been described above with reference to the accompanying drawings, the scope of rights of the present invention is determined by the claims described below and should not be construed as being limited to the above-described embodiments and/or drawings. It should also be clearly understood that improvements, changes, and modifications of the invention described in the claims that would be apparent to those skilled in the art are included within the scope of rights of the present invention.

## Claims

1. An electronic apparatus comprising:
a motion detection sensor configured to detect movement of an object in a specific area;
memory storing instructions; and
at least one processor including processing circuitry,
wherein the at least one processor, when the instructions are executed individually or collectively, is configured to:
detect the object using the motion detection sensor;
based on detection of the object, identify a second time period during which the object is not detected within a first time period through the motion detection sensor;
based on the second time period satisfying a preset first condition, identify an activity level of the object through the motion detection sensor; and
based on the activity level of the object satisfying a preset second condition, identify that the object is absent from the specific area, and
wherein the at least one processor is configured to:
based on identifying that the second time period having a preset length is not detected a preset number of times within the first time period, identify that the second time period satisfies the preset first condition.

2. The electronic apparatus of claim 1, wherein the at least one processor, when the instructions are executed individually or collectively, is configured to:
based on the second time period not satisfying the preset first condition, identify that the object is present in the specific area.

3. The electronic apparatus of claim 1, wherein the at least one processor, when the instructions are executed individually or collectively, is configured to:
based on the second time period satisfying the preset first condition, identify coordinate values of the object through the motion detection sensor; and
identify a movement speed of the object based on the coordinate values of the object and identify the activity level of the object.

4. The electronic apparatus of claim 3, wherein the at least one processor, when the instructions are executed individually or collectively, is configured to:
based on identifying that the object has not moved at a movement speed equal to or greater than a preset magnitude for at least a preset period of time based on the identified movement speed, identify that the activity level of the object satisfies the preset second condition.

5. The electronic apparatus of claim 1, wherein the at least one processor, when the instructions are executed individually or collectively, is configured to:
based on the activity level not satisfying the preset second condition, identify that the object is present in the specific area.

6. The electronic apparatus of claim 1, wherein the at least one processor, when the instructions are executed individually or collectively, is configured to:
based on identifying that the object is absent from the specific area while the electronic apparatus is operating in an occupancy mode, change a mode of the electronic apparatus from the occupancy mode to a power-saving mode.

7. The electronic apparatus of claim 1, wherein the motion detection sensor is a radar sensor.

8. A control method of an electronic apparatus, the method comprising:
detecting an object using a motion detection sensor;
based on detection of the object, identifying a second time period during which the object is not detected within a first time period;
based on the second time period satisfying a preset first condition, identifying an activity level of the object through the motion detection sensor; and
based on the activity level of the object satisfying a preset second condition, identifying that the object is absent from a specific area,
wherein the method further comprises:
based on identifying that the second time period having a preset length is not detected a preset number of times within the first time period, identifying that the second time period satisfies the preset first condition.

9. The method of claim 8, further comprising:
based on the second time period not satisfying the preset first condition, identifying that the object is present in the specific area.

10. The method of claim 8, further comprising:
based on the second time period satisfying the preset first condition, identifying coordinate values of the object through the motion detection sensor; and
identifying a movement speed of the object based on the coordinate values of the object and identifying the activity level of the object.

11. The method of claim 10, wherein the identifying that the object is absent comprises:
based on identifying that the object has not moved at a movement speed equal to or greater than a preset magnitude for at least a preset period of time based on the identified movement speed, identifying that the activity level of the object satisfies the preset second condition.

12. The method of claim 8, further comprising:
based on the activity level not satisfying the preset second condition, identifying that the object is present in the specific area.

13. The method of claim 8, further comprising:
based on identifying that the object is absent from the specific area while the electronic apparatus is operating in an occupancy mode, changing a mode of the electronic apparatus from the occupancy mode to a power-saving mode.

14. The method of claim 8, wherein the motion detection sensor is a radar sensor.

15. A non-transitory computer-readable recording medium storing one or more instructions executable by a processor of an electronic apparatus to cause the electronic apparatus to perform operations, the operations comprising:
detecting an object using a motion detection sensor;
based on detection of the object, identifying a second time period during which the object is not detected within a first time period;
based on the second time period satisfying a preset first condition, identifying an activity level of the object through the motion detection sensor; and
based on the activity level of the object satisfying a preset second condition, identifying that the object is absent from a specific area,
wherein the operations further comprise:
based on identifying that the second time period having a preset length is not detected a preset number of times within the first time period, identifying that the second time period satisfies the preset first condition.
